# EUROPÄISCHE PATENTSCHRIFT

(11) **EP 3 325 524 B1**
(45) Veröffentlichungstag und Bekanntmachung des Hinweises auf die Patenterteilung: **27.02.2019**
(21) Anmeldenummer: 16741916.7
(22) Anmeldetag: 19.07.2016
(51) Int. Cl.: C08F 212/00, C08J 9/28, C08F 8/30, C08F 8/12, C08F 8/10, C08F 8/44, B01J 45/00, C02F 1/28, C02F 1/58, C02F 101/14, C08F 212/08, C08F 212/36, C08L 25/08

(54) **ALUMINIUMDOTIERTE, IMINOESSIGSÄUREGRUPPE ENTHALTENDE CHELATHARZE**
ALUMINIUM-DOPED, IMINOACETIC ACID GROUP-CONTAINING CHELATE RESINS
RÉSINES DE CHÉLATE DOPÉES À L'ALUMINIUM ET CONTENANT DES GROUPES ACIDE IMINOACÉTIQUE

(30) Priorität: 20.07.2015 EP 15177431; 21.07.2015 EP 15177646
(43) Veröffentlichungstag der Anmeldung: 30.05.2018
(73) Patentinhaber: Lanxess Deutschland GmbH, 50569 Köln (DE)
(72) Erfinder: NEUMANN, Stefan, 51375 Leverkusen (DE); KOOP, Bernd, 50668 Köln (DE); BARBIER, Jenny, 50679 Köln (DE); KLIPPER, Reinhold, 50933 Köln (DE)
(86) Internationale Anmeldenummer: PCT/EP2016/067167
(87) Internationale Veröffentlichungsnummer: WO 2017/013110

(56) Entgegenhaltungen:
- EP-A1- 0 980 711
- WO-A1-2004/110623
- WO-A1-2007/088010
- SUBBAIAH MUTHU PRABHUA & S MEENAKSHIA: "Effect of metal ions loaded onto iminodiacetic acid functionalized cation exchange resin for selective fluoride removal", DESALINATION AND WATER TREATMENT : SCIENCE AND ENGINEERING ; DWT, TAYLOR & FRANCIS, UK, Bd. 52, Nr. 13-15, März 2014 (2014-03), Seiten 2527-2536, XP008169289, ISSN: 1944-3994, DOI: 10.1080/19443994.2013.792747 [gefunden am 2014-05-20]
- PARIPURNANDA LOGANATHAN ET AL: "Defluoridation of drinking water using adsorption processes", JOURNAL OF HAZARDOUS MATERIALS, Bd. 248-249, 4. Januar 2013 (2013-01-04), Seiten 1-19, XP055118765, ISSN: 0304-3894, DOI: 10.1016/j.jhazmat.2012.12.043

## Beschreibung

Die vorliegende Erfindung betrifft aluminiumdotierte, Iminoessigsäuregruppen enthaltende Chelatharze, ein Herstellungsverfahren für aluminiumdotierte Iminoessigsäuregruppen enthaltende Chelatharze, eine Vorrichtung enthaltend mindestens eine Schicht, mindestens eines aluminiumdotierten, Iminoessigsäuregruppen enthaltenden Chelatharzes, sowie die Verwendungen dieser Vorrichtung und der Chelatharze zur Entfernung von Fluorid aus Wasser.

Fluorid ist ein Spurenelement, das überall in unserer Umwelt vorkommt. Zudem fällt es als Abfallprodukt bei der industriellen Produktion von Keramiken oder Porzellan oder in der Halbleiter- und Solarindustrie an. Aufgrund der bestehenden Produktionsprozesse wird es dabei häufig mit dem Abwasser entsorgt. Natürliche Vorkommen können ebenfalls zu Belastungen des Wassers durch Fluorid führen.

Die Entfernung von Fluorid aus Wasser wird dann erforderlich, wenn das Wasser zu hohe Fluoridkonzentration aufweist. Fluorid ist zwar für den Menschen ein wichtiges Spurenelement und dient zur Stärkung der Knochen und Zähne, hat jedoch bei erhöhter Aufnahme über einen längeren Zeitraum toxische Eigenschaften und kann zu Knochen- und Zahnkrankheiten wie Osteosklerose oder Fluorose führen. Ebenso besteht der Verdacht auf Cancerogenität. In Deutschland dürfen laut Trinkwasserverordnung Fluoridionen bis zu einer Konzentration von 1,5 ppm (mg/l) im Trinkwasser enthalten sein. Auch der Richtwert der Weltgesundheitsorganisation (WHO) für Fluorid im Trinkwasser liegt bei 1,5 ppm (mg/l).

Herkömmliche Verfahren zur Entfernung von Fluorid aus Abwasser, wie die aus der DE-A 2801724 bekannte Fällung durch Zugabe von Calciumchlorid oder die aus der DE-A 3004058 bekannte Adsorption von Fluorid an aktivierter Tonerde, eignen sich nicht oder nur bedingt zur Trinkwasseraufbereitung. Durch Fällung können aus eigenen Erfahrungen auch mit erheblichen Überschüssen an Fällmittel nur Konzentrationen von 3 bis 10 ppm Fluorid erreicht werden, was noch immer deutlich oberhalb des geforderten Grenzwertes von 1,5 ppm liegt. Die Adsorption von Fluorid an aktivierter Tonerde ist ebenfalls zur Trinkwasseraufbereitung ungeeignet, da die Kapazitäten sehr sensibel von der Wasserzusammensetzung abhängen. Außerdem wird der pH-Wert des abgegebenen Wassers beeinflusst und die Aluminiumoxidkörner der aktivierten Tonerde geben Aluminium an das behandelte Wasser ab, womit der in der deutschen Trinkwasserverordnung geforderte Aluminiumgrenzwert von 0,2 ppm leicht überschritten werden kann.

Ein weiteres Verfahren zur Entfernung von Fluoriden aus Wasser, bei dem die Fluoride mit Hilfe von Natriumaluminat gefällt werden, ist aus der DE-A 3129473 bekannt. Nachteilig an diesem Verfahren ist ebenfalls, dass das Wasser weiterhin zu hohe Fluoridkonzentrationen enthält.

Zudem sind aus "Solvent Extraction and Ion Exchanger", Vol. 22, No. 2, pp. 305-322, 2004, aluminium-dotierte Amberliteharze bekannt, die zur Fluoridentfernung genutzt werden, aber den Nachteil haben, ebenfalls zu hohe Mengen an Aluminiumionen freizusetzen und die eine zu geringe Fluoridaufnahmekapazität aufweisen.

Aus "Effect of metal ions loaded onto iminodiacetic acid functionalized cation exchange resin for selective fluoride removal", Desalination and Water Treatment: Science and Engineering; DWT, Taylor and Francis, UK, Bd. 52, Nr. 13-15, 1. März 2014, Seiten 2527-2536 ist bekannt, dass mit dreiwertigen Aluminiumionen dotierte Iminoessigsäuregruppen enthaltene Chelatharze, Fluorid aus Wasser entfernt werden kann.

Den bekannten Chelatharzen ist gemeinsam, dass sie zu geringe Fluoridkapazitäten aufweisen und daher nicht effizient eingesetzt werden können. Zudem können sie toxisch wirkende Substituenten enthalten. Es bestand daher weiterhin ein Bedürfnis nach einem Chelatharz zur Fluoridentfernung, mit dem die Nachteile des Standes der Technik überwunden werden.

Überraschend wurde nun gefunden, dass aluminiumdotierte Chelatharze mit Iminoessigsäuregruppen eine besonders hohe Fluoridkapazität aufweisen, wenn ihr Zweitsubstitutionsgrad in einem Bereich zwischen 0,70 und 1,20 liegt.

Gegenstand der Erfindung ist daher ein Chelatharz enthaltend funktionelle Gruppen der Formel (I) 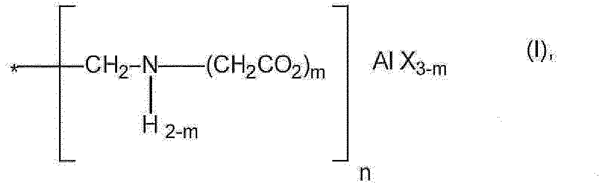 die über die Methylengruppe über einen aromatischen Rest mit dem Polymergerüst des Chelatharzes verbunden sind,
wobei das Polymergerüst aus monovinylaromatischen und polyvinylaromatischen Monomeren hergestellt wurde
und X für ein beliebiges einwertiges Anion steht, mit n = 0,60 bis 1,50 pro aromatischen Rest und m = 0,70 bis 1,20 pro Stickstoffatom.

X kann z.B. für Nitrat, Nitrit, Hydrogensulfat, Hydrogencarbonat oder ein Halogenid, wie z.B. und vorzugsweise Chlorid und Bromid stehen. X steht bevorzugt für Chlorid.
Bevorzugt wird als Polymergerüst ein Polystyrol-Copolymergerüst eingesetzt. Besonders bevorzugt wird als Polystyrol-Copolymergerüst ein Styrol/Divinylbenzol vernetztes Copolymer eingesetzt.

Des Weiteren ist ein Gegenstand der Erfindung ein Herstellungsverfahren der erfindungsgemäßen Chelatharze enthaltend funktionelle Gruppen der Formel (I), bei dem
a.) Monomertröpfchen aus wenigstens einer monovinylaromatischen Verbindung und wenigstens einer polyvinylaromatischen Verbindung sowie wenigstens einem Porogen und wenigstens einem Initiator zu einem vernetzten Perlpolymerisat umgesetzt werden,
b.) das vernetzte Perlpolymerisat aus Schritt a) mit Phthalimidderivaten phthalimidomethyliert wird und bei dieser Umsetzung das Phthalimidderivat in einem Verhältnis von 0,70 mol bis 1,70 mol pro Mol Perlpolymerisat eingesetzt wird,
c.) das phthalimidomethylierte Perlpolymerisat aus Schritt b) zu aminomethyliertem Perlpolymerisat umgesetzt wird,
d.) das aminomethylierte Perlpolymerisat aus Schritt c) mit Chloressigsäure oder deren Salze zu Chelatharzen mit Iminoessigsäuregruppen mit m = 0,70 bis 1,20 umgesetzt werden und das molare Verhältnis von Chloressigsäure oder deren Salze 0,70:1 bis 1,40:1 bezogen auf die Stoffmenge der Aminomethylgruppen im Perlpolymerisat beträgt und
e.) das Chelatharz aus Schritt d) mit einer Lösung von AlX₃ in Kontakt gebracht wird, wobei X ein beliebiges einwertiges Anion darstellt.

Wenn im weiteren Text auf aluminiumdotierte, Iminoessigsäuregruppen enthaltende Chelatharze Bezug genommen wird, entsprechen diese dem erfindungsgemäßen aluminiumdotierten Chelatharzen enthaltend funktionelle Gruppen der Formel (I).

Als monovinylaromatische Verbindungen (Monomere) im Sinne der vorliegenden Erfindung werden in Verfahrensschritt a) bevorzugt Styrol, Vinyltoluol, Ethylstyrol, α-Methylstyrol, Chlorstyrol, Chlormethylstyrol, eingesetzt. Besonders bevorzugt wird Styrol.

Insbesondere bevorzugt wird Styrol oder Mischungen aus Styrol mit den vorgenannten Monomeren, bevorzugt mit Ethylstyrol, eingesetzt.

Bevorzugte polyvinylaromatische Verbindungen (Vernetzer) im Sinne der vorliegenden Erfindung sind für Verfahrensschritt a) Divinylbenzol, Divinyltoluol, Trivinylbenzol, Divinylnaphtalin, Trivinylnaphtalin, besonders bevorzugt Divinylbenzol.

Die polyvinylaromatischen Verbindungen werden bevorzugt in Mengen von 1-20 Gew.-%, besonders bevorzugt 2-12 Gew.-%, insbesondere bevorzugt 4-10 Gew.-%, bezogen auf die Summe von Monomer(en) und Vernetzer(n), eingesetzt. Die Art der polyvinylaromatischen Verbindungen (Vernetzer) wird im Hinblick auf die spätere Verwendung des kugelförmigen Polymerisats ausgewählt. Im Falle des Einsatzes von Divinylbenzol sind kommerzielle Divinylbenzolqualitäten, die neben den Isomeren des Divinylbenzols auch Ethylvinylbenzol enthalten, ausreichend. In einer bevorzugten Ausführungsform der vorliegenden Erfindung kommen in Verfahrensschritt a) mikroverkapselte Monomertröpfchen zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane oder Polyharnstoffe.

Als natürliches Polyamid wird bevorzugt Gelatine eingesetzt. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind bekannt. Bevorzugt ist die Phasengrenzflächenkondensation, bei der eine im Monomertröpfchen gelöste Reaktivkomponente (insbesondere ein Isocyanat oder ein Säurechlorid) mit einer zweiten, in der wässrigen Phase gelösten Reaktivkomponente (insbesondere einem Amin), zur Reaktion gebracht wird.
Die gegebenenfalls mikroverkapselten Monomertröpfchen enthalten wenigstens einen Initiator oder Mischungen von Initiatoren zur Auslösung der Polymerisation. Für das erfindungsgemäße Verfahren bevorzugte Initiatoren sind Peroxyverbindungen, insbesondere bevorzugt Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan sowie Azoverbindungen wie 2,2'-Azobis(isobutyronitril) oder 2,2'-Azobis(2-methylisobutyronitril). Die Initiatoren werden bevorzugt in Mengen von 0,05 bis 2,5 Gew.-%, besonders bevorzugt 0,1 bis 1,5 Gew.-%, bezogen auf die Monomeren-Mischung, angewendet.

Porogene werden eingesetzt, um im kugelförmigen Polymerisat eine makroporöse Struktur zu erzeugen. Hierfür sind organische Lösungsmittel geeignet, die in der Monomermischung löslich sind, das entstandene Polymerisat aber schlecht lösen bzw. quellen. Beispielhaft seien hierfür Hexan, Octan, Isooctan, Isododecan oder Octanol und deren Isomere genannt.
Die Durchführung des Verfahrensschrittes a) ist dem Fachmann z.B. aus der EP-A 2305382 hinreichend bekannt.
Gemäß der vorliegenden Erfindung können die Perlpolymerisate aus Verfahrensschritt a) sowohl in heterodisperser Teilchengrößenverteilung als auch in monodisperser Teilchengrößenverteilung erhalten werden.
Ein monodisperses, vernetztes Perlpolymerisat wird in Verfahrensschritt a) erhalten, indem die Umsetzung des Verfahrensschrittes a) nach dem Jetting (Verdüsungsverfahren) oder nach dem seed / feed Verfahren (Saatzulauf-Verfahren) durchgeführt wird. Beide Verfahrensschritte sind aus dem Stand der Technik bekannt und z.B. in der EP-A 2259874 beschrieben. Die Offenbarung für diese beiden Schritte aus der EP-A 2259874 wird durch den Bezug auf diese Anmeldung in die vorliegende Beschreibung aufgenommen.
Als monodispers werden in der vorliegenden Anmeldung solche Stoffe bezeichnet, bei dem mindestens 90 Volumen- oder Massen-% der Teilchen einen Durchmesser besitzen, der in dem Intervall mit der Breite von + 10% des häufigsten Durchmessers um den häufigsten Durchmesser herum liegt.

Zum Beispiel bei einem Stoff mit häufigstem Durchmesser von 0,5 mm liegen mindestens 90-Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

Der Verfahrensschritt b) kann z.B. so durchgeführt werden, dass zunächst das Amidomethylierungsreagens hergestellt wird und dieses dann zu dem Perlpolymerisat aus Verfahrensschritt a) hinzugegeben wird. Verfahrensschritt b) kann aber ebenfalls in Form einer Eintopfreaktion durchgeführt werden, bei dem das Perlpolymerisat aus Verfahrensschritt a) mit einem Phthalimidderivat und einem kondensierten Formaldehyd, wie z.B. und bevorzugt Paraformaldehyd umgesetzt wird.

Bevorzugt wird Verfahrensschritt b) so durchgeführt, dass zunächst das Amidomethylierungsreagens hergestellt wird und dieses dann zu dem Perlpolymerisat aus Verfahrensschritt a) hinzugegeben wird.

Das Amidomethylierungsreagens wird in einer bevorzugten Ausführungsfiorm der vorliegenden Erfindung in der Weise hergestellt, dass ein Phthalimidderivat in einem Lösungsmittel gelöst und mit Formalin versetzt wird. Anschließend wird dann unter Wasserabspaltung hieraus ein Bis-(Phthalimido)ether gebildet. Der Bis-(Phthalimido)ether kann gegebenenfalls zum Phthalimidoester umgesetzt werden. Bevorzugt wird der Bis-(Phthalimido)ether eingesetzt. Bevorzugte Phthalimidderivate im Sinne der vorliegenden Erfindung sind Phthalimid oder substituierte Phthalimide, wie z.B. und bevorzugt Methylphthalimid. Besonders bevorzugt wird als Pthalimidderivat Phthalimid eingesetzt.

Das molare Verhältnis der Phthalimiderivate zu den Perlpolymerisaten liegt im Verfahrensschritt b) bei 0,70:1 bis 1,70:1. Bevorzugt wird das Phthalimidderivat in einem Stoffmengenverhältnis von 0,70:1 bis 1,35:1 in Verfahrensschritt b) eingesetzt. Ganz besonders bevorzugt werden 0,80 mol bis 1,1 mol Phthalimidderivat pro mol Perlpolymerisat in Verfahrensschritt b) eingesetzt.

Formalin wird üblicherweise bezogen auf Phthalimidderivat im Überschuß eingesetzt, es können aber auch andere Mengen eingesetzt werden. Bevorzugt wird pro mol Phthalimidderivat 1,01 bis 1,20 mol Formalin eingesetzt. Ganz bevorzugt werden 1,03 bis 1,07 mol Formalin pro mol Phthalimidderivat eingesetzt.

Als Lösungsmittel kommen im Verfahrensschritt b) inerte Lösungsmittel zum Einsatz, die geeignet sind, das Polymer zu quellen, bevorzugt chlorierte Kohlenwasserstoffe, besonders bevorzugt Dichlorethan oder Methylenchlorid. Es ist aber auch denkbar, dass kein Lösungsmittel bzw. Quellungsmittel in Verfahrensschritt b) eingesetzt wird. Im Verfahrensschritt b) wird das Perlpolymerisat mit Phthalimidderivaten kondensiert. Als Katalysator wird hierbei Oleum, Schwefelsäure oder Schwefeltrioxid eingesetzt, um daraus ein SO₃-Addukt des Phthalimidderivats im inerten Lösungsmittel herzustellen. Im Verfahrensschritt b) wird üblicherweise der Katalysator im Unterschuss zum Phthalimidderivat zugesetzt, wenn gleich auch größere Mengen verwendet werden können. Bevorzugt liegt das molare Verhältnis des Katalysators zu den Phthalimidderivaten zwischen 0,1 : 1 und 0,45 : 1 . Besonders bevorzugt liegt das molare Verhältnis des Katalysators zu den Phthalimidderivaten zwischen 0,2 : 1 und 0,4 : 1.
Die Temperatur bei der Zugabe des Katalysators zum Perlpolymerisat und dem SO₃-Addukt des Phthalimidderivates sollte bevorzugt unter 45°C, besonders bevorzugt zwischen 5 bis 30°C liegen.
Verfahrensschritt b) kann in Abhängigkeit vom Lösungsmittel bei unterschiedlichsten Temperaturen durchgeführt werden. Im Allgemeinen wird die Reaktion bei 40°C bis 80°C durchgeführt, es können aber ebenfalls andere Temperaturen gewählt werden. Bevorzugt wird Verfahrensschritt b) bei 60°C bis 80 °C durchgeführt. Üblicherweise wird der Ansatz 1 bis 15 Stunden gerührt. Der Ansatz kann aber auch länger oder kürzer gerührt werden. Bevorzugt wird die Reaktion im Verfahrensschritt b) 6 bis 10 Stunden gerührt.
Durch das erfindungsgemäße Verfahren kann ein beliebiger Erstsubstitutionsgrad n = 0,60 bis 1,50 Phthalimidomethyl-Gruppen erzielt werden. Mit Erstsubstitutionsgrad wird in der vorliegenden Anmeldung die mittlere Anzahl an Phthalimidomethylgruppen pro aromatischem Rest verstanden, bezogen auf die Summe der substituierten und nicht substituierten aromatischen Reste. Ein Erstsubstitutionsgrad von n = 1,10 bedeutet beispielsweise, dass 1 H Atom am aromatischen Rest durch eine Phthalimidomethylgruppe substituiert wurde und das zusätzlich noch jeder zehnte aromatische Rest zweifach substituiert wurde. Bevorzugt liegt der Erstsubstitutionsgrad durch Phthalimidomethylgruppen zwischen n = 0,60 bis 1,20 und besonders bevorzugt zwischen n = 0,70 bis 1,00.
Die Abspaltung des Phthalsäurerestes und damit die Freilegung der Aminomethylgruppe erfolgt im Verfahrensschritt c) im Allgemeinen und vorzugsweise durch Behandeln des phthalimidomethylierten vernetzten Perlpolymerisates mit wässrigen oder alkoholischen Lösungen eines Alkalihydroxids, wie Natriumhydroxid oder Kaliumhydroxid bei Temperaturen von 100 bis 250°C, vorzugsweise von 120 bis 190°C. Die Konzentration der Natronlauge liegt im Bereich von 10 bis 50 Gew.-%, vorzugsweise von 20 bis 40 Gew.-%.

Das dabei entstehende aminomethylierte Perlpolymerisat wird im Allgemeinen mit vollentsalztem Wasser alkalifrei gewaschen.

Im Verfahrensschritt d) erfolgt die Herstellung der erfindungsgemäßen Chelatharze durch Umsetzung des aminomethylgruppenhaltigen vernetzten, vinylaromatischen Perlpolymerisates in wässriger Suspension mit Chloressigsäure oder ihren Salzen, wie beispielsweise und bevorzugt die Lithium-, Natrium-, Kalium-, Calcium und Magnesiumsalze. Ein insbesondere bevorzugtes Chloressigsäuresalz ist das Natriumsalz der Chloressigsäure.

Das Natriumsalz der Chloressigsäure wird bevorzugt als wässrige Lösung eingesetzt. Besonders bevorzugt wird eine wässrige Chloressigsäure mit 60 Gew.-% bis 85 Gew.-% eingesetzt.

Die wässrige Lösung des Natriumsalzes der Chloressigsäure oder die wässrige Chloressigsäure wird im Allgemeinen bei der Reaktionstemperatur innerhalb von 0,5 bis 15 Stunden in die vorgelegte wässrige Suspension des aminomethylgruppenhaltigen Perlpolymerisates dosiert. Bevorzugt erfolgt die Dosierung innerhalb von 5 bis 11 Stunden.

Die bei der Umsetzung der aminomethylgruppen haltigen Perlpolymerisate mit Chloressigsäure freiwerdende Salzsäure wird im Allgemeinen durch Zugabe von Natronlauge teilweise oder ganz neutralisiert, sodass der pH Wert der wässrigen Suspension bei dieser Reaktion im Bereich zwischen pH 7 bis 11,5 eingestellt wird. Bevorzugt wird die Reaktion bei pH 8 bis 10 durchgeführt.

Verfahrensschritt d) wird üblicherweise bei Temperaturen im Bereich zwischen 50°C und 100°C durchgeführt. Es können aber auch Temperaturen außerhalb dieses Bereiches gewählt werden. Bevorzugt erfolgt die Reaktion bei Temperaturen im Bereich zwischen 80°C und 95°C.

Bevorzugt beträgt das Molverhältnis des Chloressigsäurederivates zu dem aminomethylgruppenhaltigem Perpolymerisat 0,80:1,0 bis 1,1:1,0, bezogen auf die Stoffmenge der Aminomethylgruppen im Perlpolymerisat, wenn ein Zweitsubstitutionsgrad zwischen m = 0,75 und 0,95 erzielt wird.

Als Suspensionsmedium wird Wasser oder wässrige Salzlösung eingesetzt. Als Salze kommen Alkalimetallsalze insbesondere NaCl und Natriumsulfat in Frage.

Durch die Reaktion kann ein beliebiger Zweitsubstitutionsgrad zwischen m = 0,50 und 2,00 bezogen auf die durch Essigsäuregruppen substituierten Wasserstoffatome der Aminogruppen erzielt werden. Ein Zweitsubstitutionsgrad von m = 1,50 bedeutet z.B., dass statistisch nur in jeder zweiten Aminogruppe beide Wasserstoffatome durch Essigsäuregruppen substituiert wurden. Mit Zweitsubstitutionsgrad wird in der vorliegenden Anmeldung die mittlere Anzahl an Essigsäuregruppen verstanden, die pro Aminogruppen, bezogen auf die Summe der substituierten und nicht substituierten Aminogruppen eingefügt wurden. Der Zweitsubstitutionsgrad der Aminogruppe durch Essigsäuregruppen liegt in der vorliegenden Erfindung zwischen m = 0,70 bis 1,20, bevorzugt liegt der Zweitsubstitutionsgrad zwischen m = 0,75 und 0,95.

Im Verfahrensschritt e) erfolgt die Dotierung der erfindungsgemäßen Chelatharze durch Umsetzung mit Aluminiumsalzlösungen zur Herstellung des erfindungsgemäßen aluminiumdotierten, Iminoessigsäuregruppen enthaltenden Chelatharzes. Als geeignete Aluminiumsalzlösungen können alle Lösungen dreiwertiger Aluminiumsalze eingesetzt werden. Im Allgemeinen werden Salze des dreiwertigen Aluminiums mit starken Säuren wie z.B. Aluminiumchlorid, Aluminiumnitrat, Aluminiumsulfat, Aluminiumbromid oder Aluminiumiodid oder deren Hydrate und Solvate verwendet. Die vorstehend genannten Anionen der Aluminiumsalze Chlorid, Nitrat, Bromid, lodid und deren Hydrate und Solvate stellen auch bevorzugte Anionen X in den funktionellen Gruppen der Formel (I) dar. Bevorzugt wird Aluminiumchlorid zur Dotierung der Iminoessigsäuregruppen enthaltenden Chelatharze verwendet. Bevorzugt wird als Lösungsmittel der Aluminiumsalze Wasser verwendet. Bevorzugt werden wässrige Lösungen eingesetzt.

Die zur Dotierung eingesetzte Menge an Aluminium liegt im Allgemeinen zwischen 2 bis 7 mol Aluminium bezogen auf ein Liter eingesetztes Iminoessigsäuregruppen enthaltendes Chelatharz. Die Menge an eingesetzten Aluminiumionen kann allerdings auch außerhalb dieses Bereiches liegen. Bevorzugt liegt die zur Dotierung eingesetzte Menge an Aluminium zwischen 5 bis 7 mol pro Liter eingesetztem Iminoessigsäuregruppen enthaltendem Chelatharz.

Das erfindungsgemäße Chelatharz enthaltend funktionelle Gruppen der Formel (I) ist besonders geeignet zur Entfernung von Fluorid aus Wasser.

Die erfindungsgemäßen Chelatharze enthaltend funktionelle Gruppen der Formel (I) können unterschiedliche Mengen an Aluminium enthalten. Im Allgemeinen enthalten die Chelatharze enthaltend funktionellen Gruppen der Formel (I) 10 bis 50 Gramm Aluminium pro Liter Harz. Bevorzugt enthalten die Chelatharze enthaltend funktionelle Gruppen der Formel (I) 25 bis 35 Gramm Aluminium pro Liter Harz.

Die Fluoridkapazität des Chelatharzes enthaltend funktionelle Gruppen der Formel (I) an Fluorid beträgt im Allgemeinen und bevorzugt zwischen 1 bis 30 g pro Liter an eingesetztem Chelatharz.

Von der Erfindung ist ebenfalls ein Chelatharz enthaltend funktionelle Gruppen der Formel (I) mit n = 0,60 bis 1,20 und m = 0,70 bis 1,20 umfasst, das dadurch hergestellt wurde, dass man
a) Monomertröpfchen aus wenigstens einer monovinylaromatischen Verbindung und wenigstens einer polyvinylaromatischen Verbindung sowie wenigstens einem Porogen und wenigstens einem Initiator zu einem vernetzten Perlpolymerisat umsetzt,
b) das vernetzte Perlpolymerisat aus Schritt a) mit Phthalimidderivaten phthalimidomethyliert und bei dieser Umsetzung das Phthalimidderivat in einem Verhältnis von 0,70 mol bis 1,35 mol pro Mol Perlpolymerisat einsetzt,
c) das phthalimidomethylierte Perlpolymerisat aus Schritt b) zu aminomethyliertem Perlpolymerisat umsetzt,
d) das aminomethylierte Perlpolymerisat aus Schritt c) mit Chloressigsäure oder deren Salze zu Chelatharzen mit Iminoessigsäuregruppen mit einem Zweitsubstitutionsgrad m = 0,70 bis 1,20 umsetzt und das molare Verhältnis von Chloressigsäure oder deren Salzen 0,70:1 bis 1,40:1 bezogen auf die Stoffmenge der Aminomethylgruppen im Perlpolymerisat beträgt und
e.) das iminoessigsäuregruppen enthaltende Chelatharz aus Schritt d) mit einer Lösung von AlX₃ in Kontakt bringt, wobei X ein beliebiges einwertiges Anion darstellt.

Bevorzugt sind Chelatharze enthaltend funktionelle Gruppen der Formel (I) mit n = 0,70 bis 1,0 und m = 0,70 bis 1,20, die dadurch hergestellt werden, dass man
a) Monomertröpfchen aus wenigstens einer monovinylaromatischen Verbindung und wenigstens einer polyvinylaromatischen Verbindung sowie wenigstens einem Porogen und wenigstens einem Initiator zu einem vernetzten Perlpolymerisat umsetzt,
b) das vernetzte Perlpolymerisat aus Schritt a) mit Phthalimidderivaten phthalimidomethyliert und bei dieser Umsetzung das Phthalimidderivat in einem Verhältnis von 0,80 mol bis 1,1 mol pro Mol Perlpolymerisat einsetzt,
c) das phthalimidomethylierte Perlpolymerisat aus Schritt b) zu aminomethyliertem Perlpolymerisat umsetzt,
d) das aminomethylierte Perlpolymerisat aus Schritt c) mit Chloressigsäure oder deren Salze zu Chelatharzen mit Iminoessigsäuregruppen mit einem Zweitsubstitutionsgrad m = 0,70 bis 1,20 umsetzt und das molare Verhältnis von Chloressigsäure oder deren Salze 0,70:1 bis 1,40:1 bezogen auf die Menge des eingesetzten aminomethylierten Perlpolymerisats beträgt und
e.) das iminoessigsäuregruppen enthaltende Chelatharz aus Schritt d) mit einer Lösung von AlX₃ in Kontakt bringt, wobei X ein beliebiges einwertiges Anion darstellt.

Bevorzugt werden monodisperse Chelatharze mit funktionellen Gruppen der Formel (I) hergestellt.

Die Erfindung ist zur Entfernung von Fluorid aus Wasser geeignet. Daher ist von der Erfindung zudem eine Vorrichtung zur Entfernung von Fluorid aus Wasser umfasst, die mindestens ein Chelatharz enthaltend funktionelle Gruppen der Formel (I) enthält.

Die Vorrichtung könnte zudem ein weiteres Iminoessigsäuregruppen enthaltendes Chelatharz beinhalten, welches mit Kalziumionen dotiert wurde. Solche Harze und deren Herstellung sind aus dem Stand der Technik bekannt. Bei der Kombination zweier, mit Aluminium oder mit Kalzium dotierte Iminoessigsäuregruppen enthaltende Chelatharze, kann einerseits Fluorid aus dem Wasser entfernt werden und andererseits die Menge an toxischen Aluminiumionen, die an das Wasser aus dem Chelatharz enthaltend funktionelle Gruppen der Formel (I) abgegeben wird, reduziert werden.

Wasser im Sinne der Erfindung sind vorzugsweise wässrige Lösungen, Emulsionen oder Mischungen aus Wasser und organischen Lösungsmitteln. Im wässrigen Anteil dieses Wassers liegen die Fluoride in gelöster Form vor. Im Allgemeinen enthält das Wasser einen wässrigen Anteil von mindestens 10 Gew.-% Wasser bezogen auf die Gesamtmenge an Wasser. Besonders bevorzugt enthält das Wasser gemäß der vorliegenden Erfindung mindestens 90 Gew.-% Wasser, ganz besonders bevorzugt mindestens 99 Gew.-% Wasser, bezogen auf die Gesamtmenge an Wasser.

Wasser, welches im Rahmen der Erfindung aufgereinigt werden soll, kann z.B. auch bei der Extraktion von Böden entstehen oder Abwasser darstellen. Um dieses Wasser zur weiteren Reinigung im erfindungsgemäßen Verfahren einzusetzen, wird vorzugsweise eine Filtration durchgeführt, bevor dieses Wasser mit dem erfindungsgemäßen Chelatharzen gereinigt wird.

In der Regel sind die erfindungsgemäßen Chelatharze Bestandteil einer lonenaustauschersäule. Die Beladung dieser Säulen mit wässrigen Lösungen, welche Fluorid enthalten, erfolgt nach dem Fachmann bekannten Verfahren.

Die erfindungsgemäßen Chelatharze eignen sich zur Adsorption von Fluoridionen aus Wasser. Insbesondere eignen sich die erfindungsgemäßen Chelatharze zur Entfernung von Fluorid aus Wasser zur Herstellung von Trinkwasser.

Durch die Entfernung von Fluorid aus Wasser mit Hilfe des erfindungsgemäßen Chelatharzes kann der Gehalt von Fluorid auf unter 1,5 ppm reduziert werden. Im Sinne der Erfindung bedeutet daher die Aufreinigung von Wasser zur Herstellung von Trinkwasser, dass der Gehalt an Fluorid im Eluat des Chelatharzes auf Werte kleiner 1,5 ppm reduziert wird.

Daher ist von der Erfindung ebenfalls die Verwendung der Chelatharzes zur Entfernung von Fluorid aus Wasser, insbesondere zur Herstellung von Trinkwasser umfasst.

Die erfindungsgemäßen Chelatharze weisen eine besonders hohe Affinität zu Fluoridionen auf und sind daher besonders zur Entfernung von Fluorid, insbesondere unter hohen Salzgehalten (>10 meq/L), aus Wasser geeignet.

### Beispiele

### Beispiel 1

a) Herstellung eines heterodispersen, makroporösen Perlpolymerisates auf der Basis von Styrol und Divinylbenzol.
   Bei Raumtemperatur werden im Reaktor 1112 ml voll entsalztes Wasser vorgelegt .Dazu werden 72 ml einer 2 Gew. % igen wässrigen Walocellösung dosiert. Walocel (DOW Chemical) ist eine Hydroxyethylmethylcellulose. Diese Lösung wird in der Weise hergestellt, das der Feststoff Hydroxyethylmethylcellulose in vorgelegtes Wasser unter Rühren eingetragen wird und dann weitere 4 Stunden gerührt wird. Nach Dosierung der wässrigen Walocellösung wird weitere 30 Minuten gerührt. Anschließend werden 7,5 Gramm Dinatriumhydrogenphosphat *12 H₂O dosiert. Es wird weitere 30 Minuten gerührt.
   Bei stehendem Rührer dosiert man die organische Phase bestehend aus 865,1 g Styrol, 94,9 g Divinylbenzol 80,95 gew. % ig, 576 g Isododekan und 7,68 g Dibenzoylperoxid 75 gew.-%ig zu. Die Lösung war zuvor separat hergestellt worden .
   Die o.g. Mischung wird unter Rühren durch Temperaturerhöhung nach einem Temperaturprogramm bei 25°C beginnend und bei 95°C endend auspolymerisiert.
   Die Mischung wird abgekühlt, die Suspension wird auf ein Sieb gegeben, mit vollentsalztem Wasser gewaschen und 48 Stunden im Laborvakuumschrank bei 80°C getrocknet.
   Gewichtsausbeute bezogen auf die Gesamtmenge der eingesetzten Monomeren : 957,2 Gramm
b) Herstellung des heterodispersen, amidomethylierten Perlpolymerisates
   Bei Raumtemperatur werden 666 ml Dichlorethan, 353,7 g Phthalimid und 204,5 g 36 gew.-%iges Formalin vorgelegt. Der pH Wert der Suspension wird mit Natronlauge auf 5,5 bis 6 eingestellt. Anschließend wird das Wasser destillativ entfernt. Dann werden 25,9 g Schwefelsäure zudosiert. Das entstehende Wasser wird destillativ entfernt. Der Ansatz wird abgekühlt. Bei 30°C werden 94,7 g 65 %iges Oleum und anschließend 252,5 g Perlpolymerisat, hergestellt nach Verfahrensschritt a) aus Beispiel 1, eindosiert. Die Suspension wird auf 70°C erhitzt und weitere 6,5 Stunden bei dieser Temperatur gerührt. Die Reaktionsbrühe wird abgezogen, voll entsalztes Wasser wird hinzudosiert und Restmengen an Dichlorethan werden destillativ entfernt.
   Ausbeute an amidomethyliertem Perlpolymerisat : 1100 ml
c) Herstellung des heterodispersen aminomethylierten Perlpolymerisates
   Zu 1080 ml amidomethyliertem Perlpolymerisat werden 547 ml voll entsalztes Wasser und 484,8 g 50 gew.-%ige Natronlauge bei Raumtemperatur zudosiert. Die Suspension wird auf 180°C erhitzt und 8 Stunden bei dieser Temperatur gerührt.
   Das erhaltene aminomethylierte Perlpolymerisat wird mit vollentsalztem Wasser gewaschen.
   Ausbeute an aminomethyliertem Perlpolymerisat : 835 ml
   Menge an Aminomethylgruppen in mol pro Liter aminomethyliertem Perlpolymerisat: 2,31 mol/l.
   Hieraus lässt sich errechnen, dass im statistischen Mittel pro aromatischem Kern n = 0,95 Wasserstoffatome durch Aminomethylgruppen substituiert wurden.
d) Herstellung des Chelatharzes mit chelatisierenden Gruppen vom Iminoessigsäuretyp
   Zu 563 ml vollentsalztem Wasser werden bei Raumtemperatur 805 ml aminomethyliertes Perlpolymerisat aus Beispiel 1c) dosiert. Die Suspension wird auf 90°C erhitzt. Zu dieser Suspension werden innerhalb von 6 Stunden 241,6 g einer wässrigen Lösung, die 80 gew.-%ig an Monochloressigsäure ist, dosiert. Gleichzeitig wird der pH Wert der Suspension durch Dosierung von 50 gew.-%iger Natronlauge bei pH 9,2 gehalten. Anschließend wird der Ansatz auf 95 °C erhitzt und der pH-Wert der Suspension mit 50 gew.-%iger Natronlauge auf pH 10,5 eingestellt. Es wird weitere 6 Stunden bei pH 10,5 und 95°C gerührt.
   Danach wird die Suspension abgekühlt. Das Harz wird mit vollentsalztem Wasser chloridfrei gewaschen.
   Ausbeute: 1240 ml Chelatharz
   Zweitsubstitutionsgrad: m = 1,04
   Hiernach sind im statistischen Mittel 1,04 der beiden Wasserstoffatome der primären Aminogruppe durch Essigsäuregruppen substituiert.
e) Dotierung der Harze mit Aluminium
   110 ml Chelatharz aus Beispiel d) werden in eine Chromatographiesäule mit Frittenboden eingebaut. In einem 1 Liter Becherglas werden 550 ml einer 1 normalen Lösung von AlCl₃ in demineralisiertem Wasser vorgelegt. Mittels Schlauchpumpe wird die Aluminiumchloridlösung nun eine Stunde lang im Abstrom über das Harzbett und wieder zurück in das Becherglas gepumpt. Die Umpumprate liegt dabei bei 10 BV/h, also 1,1 Liter/h. Das Harz belädt sich dabei mit Aluminium und schrumpft um 10 % im Volumen auf 100 ml.
   Danach wird die Aluminiumchloridlösung verworfen und 1 Liter deionisiertes Wasser in das Becherglas gefüllt. Das deionisierte Wasser wird mit einer Pumprate von 1 Liter pro Stunde (10 BV/h) über das Harz in den Ausguss gefördert. Das deionisierte Wasser spült überschüssiges Aluminium vom Chelatharzharz. Das Material ist danach betriebsbereit.
   Harzvolumen: 100 ml
   100 ml Harz enthalten 3,2 Gramm Aluminium.
f) Versuch zur Adsorption von Fluorid an einem mit Aluminium dotierten Harz
   100 ml des mit Aluminium dotierten Harzes aus Beispiel 1 e) werden in der o.g. Chromatographiesäule für den Abstrombetrieb im Zulauf über eine Pumpe an einen 200 Liter Vorlagebehälter und im Ablauf an einen 200 Liter Auffangbehälter angeschlossen.

Im 200 Liter Zulaufbehälter werden 200 Liter demineralisiertes Wasser vorgelegt und darin 28 g CaCl₂, 53 g Na₂SO₄*6H₂0, 100 g NaCl und 4,4 g NaF gelöst. Die resultierende Zusammensetzung der Lösung ist in Tabelle 1 angegeben.

**Tabelle 1: Zusammensetzung der Zulauflösung**

| **Ion** | **Konzentration [ppm]** | **Konzentration [meq/l]** |
|---|---|---|
| Calcium | 51 | 2,54 |
| Natrium | 257 | 11,17 |
| Chlorid | 393 | 11,09 |
| Sulfat | 102 | 2,13 |
| Fluorid | 10 | 0,53 |
| Gesamt | 813 | 27,46 |

In regelmäßigen Zeitabständen werden im Ablauf die Fluoridkonzentrationen gemessen. Aus dem Volumen an Filtrat, in welchem eine Ablaufkonzentration von < 1,5 mg/L gemessen wird, ergibt sich über Massenbilanzierung die Nutzbare Kapazität (NK) angegeben als die Masse abgeschiedenen Fluorids (in g) pro Liter Chelataustauscher (in der vorgelegten Aluminiumform).

### Die nutzbare Kapazität ist 2,1 g Fluorid pro L Harz

### Vergleichsbeispiel

Versuch zur Adsorption von Fluorid an einem mit Aluminium dotierten heterodispersen Harz mit einem Zweitsubstitutionsgrad = 1,5

Das Vergleichsbeispiel wurde analog zu Beispiel 1 Schritt f.) durchgeführt.

Harzmuster A (aluminiumdotiertes, Iminodiessigsäuregruppen enthaltendes Chelatharz):
Erstsubstitutionsgrad: n = 0,78, Zweitsubstitutionsgrad m = 1,5,

Die Ergebnisse sind in Tabelle 2 dargestellt:

**Tabelle2: Nutzbare Kapazitäten (NK) von Harz A:**

| **Harzmuster** | **NK (g F- pro L Harz)** |
|---|---|
| Harzmuster A (aluminiumdotiertes, Iminodiessigsäuregruppen enthaltendes Chelatharz): | 1,9 |

### Ergebnisse

Das in Tabelle 3 zugefügte Beispiel 2 wurde analog hergestellt und die Nutzbare Kapazität bestimmt.

**Tabelle 3: Nutzbare Kapazitäten der Chelatharze aus den Beispielen**

| | **Erstsubstitution** | **Zweitsubstitution** | **NK [g F⁻/L Harz]** |
|---|---|---|---|
| Beispiel 1 | 0,95 | 1,04 | 2,1 |
| Beispiel 2 | 0,97 | 0,85 | 3,5 |
| Vergleichsbeispiel | 0,78 | 1,5 | 1,9 |

### Analysenmethoden

### Bestimmung der Menge an basischen Aminomethylgruppen im aminomethylierten, vernetzten Polystyrolperlpolymerisat

100 ml des aminomethylierten Perlpolymerisates werden auf dem Stampfvolumeter eingerüttelt und anschließend mit vollentsalztem Wasser in eine Glassäule gespült. In 1 Stunde und 40 Minuten werden 1000 ml 2 gew.-%ige Natronlauge überfiltriert. Anschließend wird vollentsalztes Wasser überfiltriert bis 100 ml Eluat mit Phenolphthalein versetzt einen Verbrauch an 0,1 N (0,1 normaler) Salzsäure von höchstens 0,05 ml haben.

50 ml dieses Harzes werden in einem Becherglas mit 50 ml vollentsalztem Wasser und 100 ml 1 N Salzsäure versetzt. Die Suspension wird 30 Minuten gerührt und anschließend in eine Glassäule gefüllt. Die Flüssigkeit wird abgelassen. Es werden weitere 100 ml 1 N Salzsäure über das Harz in 20 Minuten filtriert. Anschließend werden 200 ml Methanol überfiltriert. Alle Eluate werden gesammelt und vereinigt und mit 1 N Natronlauge gegen Methylorange titriert.

Die Menge an Aminomethylgruppen in 1 Liter aminomethyliertem Harz errechnet sich nach folgender Formel: (200 - V) • 20 = mol Aminomethylgruppen pro Liter Harz.

### Bestimmung der Menge schwach saurer Iminoessigsäuregruppen im Chelatharz und Bestimmung des Substitutionsgrades der Wasserstoffatome der primären Aminogruppen durch Essigsäuregruppen - Zweitsubstitution

100 ml Austauscher werden in eine Filtersäule gefüllt und in 1,5 Stunden mit 500 ml 3 gew.-%iger Salzsäure eluiert. Dann wird mit voll entsalztem Wasser gewaschen bis der Ablauf neutral ist.

Von der verbleibenden Harzmenge werden 50 ml Harz genommen und in eine Säule gefüllt. 0,1 N Natronlauge wird über die Harzmenge filtriert. Der Ablauf wird jeweils in einem 250 ml Messkolben aufgefangen. Diese Flüssigkeitsmenge wird mit 1 N Salzsäure gegen Methylorange titriert. Es wird solange 0,1 N Natronlauge über das Harz filtriert bis 250 ml Ablauf einen Verbrauch von 24,5 bis 25 ml an 1 N Salzsäure haben. Nach beendeter Prüfung bestimmt man das Volumen des Austauschers in der Na-Form.
Totalkapazität (TK) = (X*25-Summe V) -3 in mol/l Austauscher
X = Zahl der Ablauffraktionen
Summe V = Gesamtverbrauch in ml an 1 N Salzsäure bei der Titration

## Patentansprüche

1. Chelatharz enthaltend funktionelle Gruppen der Formel (I) 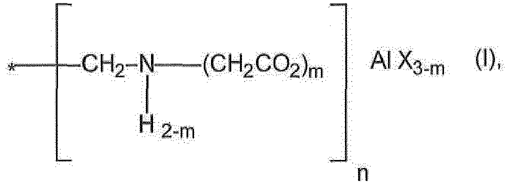
die über die Methylengruppe über einen aromatischen Rest mit dem Polymergerüst des Chelatharzes verbunden sind,
wobei das Polymergerüst aus monovinylaromatischen und polyvinylaromatischen Monomeren hergestellt wurde
und X für ein beliebiges einwertiges Anion steht, mit n = 0,60 bis 1,50 pro aromatischen Rest und m = 0,70 bis 1,20 pro Stickstoffatom.

2. Chelatharz gemäß Anspruch 1, **dadurch gekennzeichnet, dass** n = 0,60 bis 1,20 und m = 0,70 bis 1,20.

3. Chelatharz gemäß einem der Ansprüche 1 oder 2, **dadurch gekennzeichnet, dass** das Polymergerüst ein Polystyrol-Copolymerisat darstellt.

4. Chelatharz gemäß einem der Ansprüche 1 bis 3, **dadurch gekennzeichnet, dass** X ausgewählt ist aus der Gruppe Nitrat, Chlorid oder Bromid.

5. Chelatharz gemäß einem der Ansprüche 1 bis 4, **dadurch gekennzeichnet, dass** das Chelatharz 25 bis 35 g Aluminium pro Liter Harz enthält.

6. Verfahren zur Herstellung des Chelatharzes gemäß Anspruch 1, **dadurch gekennzeichnet,**
a.) **dass** Monomertröpfchen aus wenigstens einer monovinylaromatischen Verbindung und wenigstens einer polyvinylaromatischen Verbindung sowie wenigstens einem Porogen und wenigstens einem Initiator zu einem vernetzten Perlpolymerisat umgesetzt werden,
b.) das vernetzte Perlpolymerisat aus Schritt a) mit Phthalimidderivaten phthalimidomethyliert wird und bei dieser Umsetzung das Phthalimidderivat in einem Verhältnis von 0,70 mol bis 1,70 mol pro Mol Perlpolymerisat eingesetzt wird,
c.) das phthalimidomethylierte Perlpolymerisat aus Schritt b) zu aminomethyliertem Perlpolymerisat umgesetzt wird und
d.) das aminomethylierte Perlpolymerisat aus Schritt c) mit Chloressigsäure oder deren Salze zu Chelatharzen mit Iminoessigsäuregruppen mit m = 0,70 bis 1,20 umgesetzt werden und das molare Verhältnis von Chloressigsäure oder deren Salze 0,70:1 bis 1,40:1 bezogen auf die Stoffmenge der Aminomethylgruppen im Perlpolymerisat beträgt und
e.) das Chelatharz aus Schritt d) mit einer Lösung von AlX₃ in Kontakt gebracht wird, wobei X ein beliebiges einwertiges Anion darstellt.

7. Verfahren gemäß Anspruch 6 , **dadurch gekennzeichnet, dass** Schritt b) bei einer Temperatur von 60°C bis 80°C durchgeführt wird.

8. Verfahren gemäß Anspruch 6 oder 7 **dadurch gekennzeichnet, dass** in Schritt b) zur Kondensation des Phthalimidderivates mit dem Perlpolymerisat der Katalysator in einem molaren Verhältnis von 0,1 : 1 bis 0,45 : 1 in Bezug auf die Phthalimidderivate eingesetzt wird.

9. Verfahren zur Herstellung des Chelatharzes gemäß Anspruch 6, **dadurch gekennzeichnet, dass**
a) Monomertröpfchen aus wenigstens einer monovinylaromatischen Ver-bindung und wenigstens einer polyvinylaromatischen Verbindung sowie wenigstens einem Porogen und wenigstens einem Initiator zu einem vernetzten Perlpolymerisat umgesetzt werden,
b) das vernetzte Perlpolymerisat aus Schritt a) mit Phthalimidderivaten phthalimidomethyliert wird und bei dieser Umsetzung das Phthalimidderivat in einem Verhältnis von 0,70 mol bis 1,35 mol pro Mol Perlpolymerisat eingesetzt wird,
c) das phthalimidomethylierte Perlpolymerisat aus Schritt b) zu aminomethyliertem Perlpolymerisat umgesetzt wird und
d.) das aminomethylierte Perlpolymerisat aus Schritt c) mit Chloressigsäure oder deren Salze zu Chelatharzen mit Iminoessigsäuregruppen mit m = 0,70 bis 1,20 umgesetzt werden und das molare Verhältnis von Chloressigsäure oder deren Salze 0,70:1 bis 1,40:1 bezogen auf die Stoffmenge der Aminomethylgruppen im Perlpolymerisat beträgt und
e.) das Chelatharz aus Schritt d) mit einer Lösung von AlX₃ in Kontakt gebracht wird, wobei X ein beliebiges einwertiges Anion darstellt.

10. Verfahren gemäß mindestens einem der Ansprüche 6 bis 9, **dadurch gekennzeichnet, dass** die in Verfahrensschritt e) eingesetzte Menge an Aluminium 2 bis 7 mol Aluminium bezogen auf ein Liter eingesetztes Iminoessigsäuregruppen enthaltendes Chelatharz aus Schritt d) beträgt.

11. Vorrichtung zur Entfernung von Fluorid aus Wasser, enthaltend mindestens ein Chelatharz enthaltend funktionelle Gruppen der Formel (I) gemäß mindestens einem der Ansprüche 1 bis 5.

12. Verwendung der Vorrichtung gemäß Anspruch 11 zur Entfernung von Fluorid aus Wasser, bevorzugt zur Herstellung von Trinkwasser.

## Claims

1. Chelate resin containing functional groups of the formula (I) 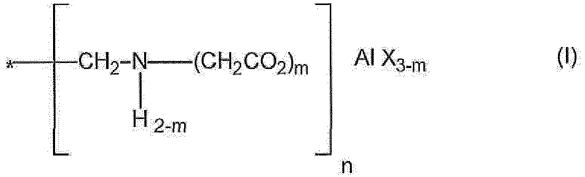
which are bonded to the polymer skeleton of the chelate resin via the methylene group via an aromatic radical,
where the polymer skeleton has been prepared from monovinylaromatic and polyvinylaromatic monomers
and X is any monovalent anion, with n = 0.60 to 1.50 per aromatic radical and m = 0.70 to 1..20 per nitrogen atom.

2. Chelate resin according to Claim 1, **characterized in that** n = 0.60 to 1.20 and m = 0.70 to 1.20.

3. Chelate resin according to either of Claims 1 and 2, **characterized in that** the polymer skeleton is a polystyrene copolymer.

4. Chelate resin according to any of Claims 1 to 3, **characterized in that** X is selected from the group of nitrate, chloride and bromide.

5. Chelate resin according to any of Claims 1 to 4, **characterized in that** the chelate resin contains 25 to 35 g of aluminium per litre of resin.

6. Process for producing the chelate resin according to Claim 1, **characterized in that**
a.) monomer droplets composed of at least one monovinylaromatic compound and at least one polyvinylaromatic compound and at least one porogen and at least one initiator are converted to a crosslinked bead polymer,
b.) the crosslinked bead polymer from step a) is phthalimidomethylated with phthalimide derivatives and the phthalimide derivative is used in this reaction in a ratio of 0.70 mol to 1.70 mol per mole of bead polymer,
c.) the phthalimidomethylated bead polymer from step b) is converted to aminomethylated bead polymer and
d.) the aminomethylated bead polymer from step c) is reacted with chloroacetic acid or salts thereof to give chelate resins having iminoacetic acid groups with m = 0.70 to 1.20 and the molar ratio of chloroacetic acid or salts thereof is 0.70:1 to 1.40:1 based on the molar amount of the aminomethyl groups in the bead polymer and
e.) the chelate resin from step d) is contacted with a solution of AlX₃ where X is any monovalent anion.

7. Process according to Claim 6, **characterized in that** step b) is conducted at a temperature of 60°C to 80°C.

8. Process according to Claim 6 or 7, **characterized in that**, in step b), condensation of the phthalimide derivative with the bead polymer is accomplished using the catalyst in a molar ratio of 0.1:1 to 0.45:1 in relation to the phthalimide derivatives.

9. Process for producing the chelate resin according to Claim 6, **characterized in that**
a) monomer droplets composed of at least one monovinylaromatic compound and at least one polyvinylaromatic compound and at least one porogen and at least one initiator are converted to a crosslinked bead polymer,
b) the crosslinked bead polymer from step a) is phthalimidomethylated with phthalimide derivatives and the phthalimide derivative is used in this reaction in a ratio of 0.70 mol to 1.35 mol per mole of bead polymer,
c) the phthalimidomethylated bead polymer from step b) is converted to aminomethylated bead polymer and
d.) the aminomethylated bead polymer from step c) is reacted with chloroacetic acid or salts thereof to give chelate resins having iminoacetic acid groups with m = 0.70 to 1.20 and the molar ratio of chloroacetic acid or salts thereof is 0.70:1 to 1.40:1 based on the molar amount of the aminomethyl groups in the bead polymer and
e.) the chelate resin from step d) is contacted with a solution of AlX₃ where X is any monovalent anion.

10. Process according to at least one of Claims 6 to 9, **characterized in that** the amount of aluminium used in process step e) is 2 to 7 mol of aluminium based on one litre of chelate resin from step d) containing iminoacetic acid groups used.

11. Device for removing fluoride from water, comprising at least one chelate resin containing functional groups of the formula (I) according to at least one of Claims 1 to 5.

12. Use of the device according to Claim 11 for removing fluoride from water, preferably for producing drinking water.

## Revendications

1. Résine chélatée contenant des groupes fonctionnels de formule (I) 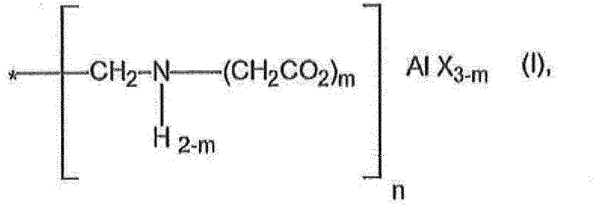
qui sont reliés par le groupe méthylène par le biais d'un radical aromatique avec le squelette polymère de la résine chélatée,
le squelette polymère ayant été fabriqué à partir de monomères monovinyliques aromatiques et polyvinyliques aromatiques,
et X représentant un anion monovalent quelconque, avec n = 0,60 à 1,50 par radical aromatique et m = 0,70 à 1,20 par atome d'azote.

2. Résine chélatée selon la revendication 1, **caractérisée en ce que** n = 0,60 à 1,20 et m = 0, 70 à 1,20.

3. Résine chélatée selon l'une quelconque des revendications 1 ou 2, **caractérisée en ce que** le squelette polymère est un copolymère de polystyrène.

4. Résine chélatée selon l'une quelconque des revendications 1 à 3, **caractérisée en ce que** X est choisi dans le groupe constitué par le nitrate, le chlorure ou le bromure.

5. Résine chélatée selon l'une quelconque des revendications 1 à 4, **caractérisée en ce que** la résine chélatée contient 25 à 35 g d'aluminium par litre de résine.

6. Procédé de fabrication de la résine chélatée selon la revendication 1, **caractérisé en ce que**
a.) des gouttelettes de monomères constituées par au moins un composé monovinylique aromatique et au moins un composé polyvinylique aromatique, ainsi qu'au moins un porogène et au moins un initiateur, sont transformées en un polymère en perles réticulé,
b.) le polymère en perles réticulé de l'étape a) est phtalimidométhylé avec des dérivés de phtalimide et, lors de cette réaction, le dérivé de phtalimide est utilisé en un rapport de 0,70 mole à 1,70 mole par mole de polymère en perles,
c.) le polymère en perles phtalimidométhylé de l'étape b) est transformé en un polymère en perles aminométhylé, et
d.) le polymère en perles aminométhylé de l'étape c) est mis en réaction avec de l'acide chloroacétique ou ses sels pour former des résines chélatées contenant des groupes acide iminoacétique avec m = 0,70 à 1,20, et le rapport molaire de l'acide chloroacétique ou ses sels est de 0,70:1 à 1,40:1, par rapport à la quantité de matière des groupes aminométhyle dans le polymère en perles, et
e.) la résine chélatée de l'étape d) est mise en contact avec une solution d'AlX₃, X étant un anion monovalent quelconque.

7. Procédé selon la revendication 6, **caractérisé en ce que** l'étape b) est réalisée à une température de 60 °C à 80 °C.

8. Procédé selon la revendication 6 ou 7, **caractérisé en ce qu'**à l'étape b), pour la condensation du dérivé de phtalimide avec le polymère en perles, le catalyseur est utilisé en un rapport molaire de 0,1:1 à 0,45:1, par rapport aux dérivés de phtalimide.

9. Procédé de fabrication de la résine chélatée selon la revendication 6, **caractérisé en ce que**
a) des gouttelettes de monomères constituées par au moins un composé monovinylique aromatique et au moins un composé polyvinylique aromatique, ainsi qu'au moins un porogène et au moins un initiateur, sont transformées en un polymère en perles réticulé,
b) le polymère en perles réticulé de l'étape a) est phtalimidométhylé avec des dérivés de phtalimide et, lors de cette réaction, le dérivé de phtalimide est utilisé en un rapport de 0,70 mole à 1,35 mole par mole de polymère en perles,
c) le polymère en perles phtalimidométhylé de l'étape b) est transformé en un polymère en perles aminométhylé, et
d.) le polymère en perles aminométhylé de l'étape c) est mis en réaction avec de l'acide chloroacétique ou ses sels pour former des résines chélatées contenant des groupes acide iminoacétique avec m = 0,70 à 1,20, et le rapport molaire de l'acide chloroacétique ou ses sels est de 0,70:1 à 1,40:1, par rapport à la quantité de matière des groupes aminométhyle dans le polymère en perles, et
e.) la résine chélatée de l'étape d) est mise en contact avec une solution d'AlX₃, X étant un anion monovalent quelconque.

10. Procédé selon au moins l'une quelconque des revendications 6 à 9, **caractérisé en ce que** la quantité d'aluminium utilisée à l'étape de procédé e) est de 2 à 7 moles d'aluminium par rapport à un litre de résine chélatée contenant des groupes iminoacétique de l'étape d) utilisée.

11. Dispositif pour l'élimination de fluorure d'eau, contenant au moins une résine chélatée contenant des groupes fonctionnels de formule (I) selon au moins l'une quelconque des revendications 1 à 5.

12. Utilisation du dispositif selon la revendication 11 pour l'élimination de fluorure d'eau, de préférence pour la fabrication d'eau potable.
